Europäisches Patentamt

European Patent Office

Office européen des brevets

(11) Publication number: **0 334 620**
**A2**

# (12) EUROPEAN PATENT APPLICATION

(21) Application number: 89302817.5

(22) Date of filing: 21.03.89

(51) Int. Cl.⁴: **C 08 L 67/02**
//(C08L67/02,63:00)

(30) Priority: 24.03.88 JP 70376/88

(43) Date of publication of application:
27.09.89 Bulletin 89/39

(84) Designated Contracting States:
AT BE CH DE ES FR GB GR IT LI LU NL SE

(71) Applicant: POLYPLASTICS CO. LTD.
3-13, Azuchi-machi 2-chome
Chuo-Ku Osaka-shi (JP)

(72) Inventor: Itoh, Haruyasu
885-11, Miyashima
Fuji-shi Shizuoka (JP)

Watanabe, Masaharu
348-13, Ishizaka
Fuji-shi Shizuoka (JP)

(74) Representative: Jackson, Peter et al
HYDE, HEIDE & O'DONNELL 146 Buckingham Palace
Road
London SW1W 9TR (GB)

The title of the invention has been amended (Guidelines for Examination in the EPO, A-III, 7.3).

(54) Polyester resin, process for producing the same and moldings produced therefrom.

(57) An improved polyester resin having a melt tension determined as described in the specification hereinbelow of at least 1.5 g is produced by reacting 100 parts by weight of a thermoplastic polyester resin with 0.02 to 20 parts by weight of a polyfunctional epoxy resin in the presence of a catalyst.

EP 0 334 620 A2

**Description**

## IMPROVED POLYESTER RESIN, PROCESS FOR PRODUCING THE SAME AND MOLDINGS PRODUCED THEREFROM

The present invention relates to an improved polyester resin, process for producing the same and moldings comprising the improved polyester resin.

[Prior Art]

Thermoplastic polyester resins are widely used as typical engineering plastics, since they have well-balanced, excellent mechanical strengths, thermal resistance, chemical resistance and electric properties. However, most of them have been those produced exclusively by injection molding.

However, recently, the uses of the polyester resins tend toward more advanced or specialized ones and attempts have been made to mold them by blow molding, vacuum molding, film extrusion molding or sheet extrusion molding, or to use them for special uses such as coating of electric wires. For example, investigations are being made for the purpose of blow molding pipes and tanks for use in an automobile engine compartment, where they are required to have high strength and to withstand high temperatures. Whereas in the prior art such pipes and tanks have been made of metals, the excellent characteristics of polyester resin offer the prospect of reduced weight and lower production costs and avoidance of rusting. Investigations are being made also for the purpose of molding the polyester resin by vacuum molding, film extrusion molding and sheet extrusion molding or utilizing it for coating electric wires, etc.

However, since the polyester resin has only a low melt tension, which is the most important processing characteristic usually required of these molding methods, the drawdown thereof is so serious that no moldings of a desired shape can be obtained. Although a process wherein a polyester resin having a high degree of polymerization and a high intrinsic viscosity is used or a process wherein a filler is added can be employed for overcoming the above-described defect, the effect of such a process is yet insufficient and the obtained polyester resin is unsatisfactory for using in these molding methods.

It was described in Japanese Patent Laid-Open No 99742/1974 that an organic compound having at least two epoxy groups was added to a polyester resin and the mixture was heated to increase the melt elasticity of the polyester resin in order to obtain a material suitable for the extrusion blowing.

However, according to the inventor's follow-up, the composition obtained by adding an epoxy compound to a polyester resin and merely heating the mixture is yet unsatisfactory for the above-described purpose. It has been thus found that a further improvement is necessary.

Namely, even when most of epoxy compounds such as diglycidyl ether of bisphenol A or epoxidized novolak are added to a polyester resin and the mixture is heated, the melt elasticity or melt viscosity is scarcely changed to suggest that substantially no reaction occurs. In this case, the characteristics such as melt tension most important for the blow molding and vacuum molding are scarcely improved. Although the melt elasticity and melt viscosity are improved to some extent by the addition of some epoxy compound followed by heating, the most important melt tension is not improved sufficiently yet. In addition, since this reaction is unstable, stable production of the material having desirable properties is quite difficult. Under these circumstances, any polyester resin usable for these purposes cannot be formed by the known, conventional processes and, therefore, an improvement thereof has been demanded.

[ Summary of the Invention ]

After intensive investigations made for the purpose of stably producing a material having characteristics suitable for the blow molding, vacuum molding, etc. under these circumstances, the inventors have completed the present invention.

The present invention relates to an improved polyester resin having a melt tension determined as will be described below of at least 1.5 g, which is produced by reacting 100 parts by weight of a thermoplastic polyester resin with 0.02 to 20 parts by weight of a polyepoxy compound in the presence of a catalyst, and a process for producing the resin.

The present invention provides also moldings produced from such an improved polyester resin or a composition comprising it produced by blow molding or vacuum molding.

The thermoplastic polyesters to be used in the present invention are those produced by the polycondensation of a dicarboxylic acid with a dihydroxy compound, polycondensation of a hydroxy carboxylic acid or polycondensation of a mixture of these three components. The effect of the present invention can be obtained irrespective of whether the polyester is a homopolyester of a copolyester.

Examples of the dicarboxylic acid compounds usable herein include known dicarboxylic acid compounds such as terephthalic, isophthalic, naphthalenedicarbo xylic, diphenyldicarboxylic, diphenyl ether dicarboxylic, diphenylethanedicarboxylic, cyclohexanedicarboxylic, adipic and sebacic acids each of which may be substituted with an alkyl or alkoxy group or a halogen atom. These dicarboxylic acid compounds can be used also in the form of ester-forming derivatives thereof such as esters thereof with a lower alcohol, e.g. dimethyl esters. These compounds can be used either singly or as a combination of two or more of them.

The dihydroxy compounds include, for example, ethylene glycol, propylene glycol, butanediol, neopentyl glycol, butenediol, hydroquinone, resorcinol, dihydroxyphenyl, naphthalenediol, dihydroxydiphenyl ether, cyclohexanediol and 2,2-bis(4-hydroxyphenyl)-propane; as well as polyoxyalkylene glycols each of which may be substituted with an alkyl, alkoxy or a halogen. They can be used either singly or as a combination of two or more of them.

The hydroxy carboxylic acids include, for example, hydroxybenzoic, hydroxynaphthoic and diphenylenoxycarboxylic acids each of which may be substituted with an alkyl or alkoxy group or a halogen atom. Further ester-forming derivatives of them are also usable. They can be used either singly or as a combination of two or more of them.

The thermoplastic polyesters formed by polycondensation of the above-described compounds as the monomeric components are usable in the present invention. They can be used either singly or as a combination of two or more of them. Among them, polyesters mainly comprising a polyalkylene terephthalate, particularly polybutylene terephthalate, are particularly preferred for exhibiting the effect of the present invention.

The polyester resin to be used in the present invention has preferably a carboxyl end group content of at least 20 mq/kg (as defined hereinafter). When it is extremely low, the reaction of the resin with an epoxy compound which will be described below does not proceed sufficiently and the production of a polyester resin having properties suitable for the blow molding, vacuum molding, film extrusion molding, etc. is difficult.

The amount of the carboxyl end groups is determined as follows: a solvent (such as benzyl alcohol when the resin is a polybutylene terephthalate resin) is added to an accurately weighed small amount of a sample. The mixture is heated to form a solution and titrated with a standard solution such as 0.01 N NaOH. The amount of the carboxyl end group is calculated in terms of milliequivalent per kg of the polyester resin (meq/kg).

The intrinsic viscosity, fluidity, etc. of the polyester resin used in the present invention are not particularly limited, so far as it can be melt kneaded. For example, polybutylene terephthalate having an intrinsic viscosity of 0.5 to 2.0 as determined in o-chlorophenol at 25°C is used.

The polyepoxy compounds to be used in the present invention are those having at least two epoxy groups in the molecule. Any of such polyepoxy compounds can be used. They include, for example, bisphenol A type epoxy compounds, bisphenol F type epoxy compounds, resorcinol type epoxy compounds, tetrahydroxyphenylmethane type epoxy compounds, novolak type epoxy compounds, polyglycol type epoxy compounds, glycerol triether-type epoxy compounds, alicyclic epoxy compounds such as vinylcyclohexane diepoxide and bis(3,4-epoxycyclohexylmethyl) adipate, and diglycidyl ester type epoxy compounds.

Further they include polymers formed by the polymerization of a glycidyl group-containing vinyl monomer or by the copolymerization thereof with another monomer polymerizable therewith, such as an olefinic monomer, e.g., ethylene or a vinyl monomer; also included are those prepared by modifying these polymers by grafting or the like.

Although any of the above-described polyepoxy compounds can be used in the present invention, the bisphenol A type epoxy compounds and novolak type epoxy compounds are particularly preferred. Those having an epoxy equivalent of 2000 or less, particularly 1000 or less, are preferred.

The polyepoxy compound is used in an amount of 0.02 to 20 parts by weight for 100 parts by weight of the polyester resin. When the amount of the polyepoxy compound is less than 0.02 part by weight, the melt tension cannot be improved sufficiently and, on the contrary, when it exceeds 20 wt.%, gelation is accelerated and the melt viscosity is increased excessively. These phenomena are unsuitable for the blow molding, vacuum molding, etc. A preferred amount of the polyepoxy compound is 0.1 to 10 parts by weight, particularly 0.2 to 5 parts by weight.

In the present invention, the ratio of the epoxy compound to the polyester resin and the kind of the epoxy compound used are suitably selected so that the K in the following formula satisfies the relationship $0.1 \leq K \leq$ :

$$\frac{W_{epo}}{W_{PEs}} = K \frac{epoxy\ equivalent \times CEG}{10^6}$$

wherein $W_{epo}$ and $E_{PEs}$ represent the amount (by weight) of the polyepoxy compound and the polyester resin, respectively, the epoxy equivalent is that of the polyepoxy compound used and CEG represents the amount of the carboxyl end group (meq.kg) of the polyester resin used.

When K is less than 0.1, an improvement in the required characteristics such as melt tension is only slight and, on the contrary, when K is larger than 5, gelation tends to occur. A preferred value of K is $0.3 \leq K \leq 3$, particularly $0.5 \leq K \leq 2$.

The improved polyester resin of the present invention is produced by reacting the above-described thermoplastic polyester resin with the polyepoxy compound in the presence of a catalyst and has a melt tension of at least 1.5 g as determined by a method which will be described below.

The melt tension is herein defined as the value obtained by measuring with a load cell a load applied when a resin ejected from an orifice having a diameter of 1 mm is taken off at a speed of 5 m/min with a capillograph kept at a temperature by 25°C higher than a melting point of the starting polyester.

When the melt tension is less than 1.5 g, any desired molding can be obtained. A preferred melt tension is at least 2.0 g, particularly at least 2.5 g.

As the catalysts of the present invention, those known as the catalysts for the reactions of epoxy compounds, namely various bases and acids, are usable. Although the materials usable for the blow molding, etc. can be thus obtained, many of these catalysts cause side reactions to impair the physical properties of the products.

Therefore the catalyst to be used in the present invention is preferably a phosphonium compound. Particularly preferred examples of them are quaternary phosphonium salts such as ethyltriphenylphosphonium iodide, ethyltriphenylphosphonium bromide and butyltriphenylphosphonium bromide. Other preferred catalysts include, for example, tertiary amines and quaternary ammonium salts.

The amount of the catalyst used in the present invention is 0.001 to 2 parts by weight for 100 parts by weight of the polyester resin. When the amount of the catalyst is less than 0.001 part by weight, the reaction proceeds only insufficiently for forming the material having characteristics suitable or the purpose. On the contrary, when it exceeds 2 parts by weight, the physical properties are impaired significantly by side reactions, etc. A preferred amount of the catalyst is 0.005 to 1 part by weight, particularly 0.01 to 0.3 part by weight.

The improved polyester resin of the present invention has a carboxyl end group content lower than that of the starting polyester resin. The improved polyester resin having a carboxyl end group content lower than that of the starting polyester resin by at least 10 meq/kg has particularly excellent characteristics. Namely, the improved polyester resin having a carboxyl end group content of 20 meq/kg or less is preferred.

Now the description will be made on the process for producing the improved polyester resin of the present invention.

The improved polyester resin of the present invention is produced by reacting a starting thermoplastic polyester with an polyepoxy compound in the presence of the above-described catalyst. In particular, the reactants are heated to the melting point thereof or a higher temperature, preferably in the range of $T = 10°C$ to $T = 50°C$ (T being the melting point of the polyester resin used) in a melt kneader such as an extruder for 0.1 to 120 min, preferably 0.5 to 60 min and particularly preferably 1 to 30 min to substantially complete the reaction to thereby obtain the intended resin. In another process, the starting thermoplastic polyester resin is kneaded with the epoxy compound and the catalyst for a short time to obtain a melt kneaded mixture, which is temporarily solidified in the form of, for example, pellets and the pellets thus formed are heated at a temperature in the range of 100°C to T, preferably 120°C to T-30°C, for at most 30 h, preferably 0.5 to 10 h, to obtain the intended resin.

The former process is easier and preferred.

The reaction is substantially completed under the above-described conditions. Thereafter the resin can be further heated, if necessary.

Although the incorporation of an inorganic filler in the improved polyester resin of the present invention is not always necessary, it is preferred in order to form moldings having excellent mechanical strengths, thermal resistance, dimensional stability (deformation resistance or warpage resistance) and electrical properties. A fibrous, granular or platy filler is used depending on the purpose.

The fibrous fillers include inorganic fibrous materials such as glass fibers, asbestos fibers, carbon fibers, silica fibers, silica/alumina fibers, zirconia fibers, boron nitride fibers, silicon nitride fibers, boron fibers, and potassium titanate fibers as well as fibrous metals, e.g. stainless steel, aluminum, titanium, copper and brass. Typical fibrous fillers are glass fibers and carbon fibers. Organic fibrous substances having a high melting point such as polyamides, fluororesins and acrylic resins are also usable like the inorganic fibrous fillers.

The granular fillers include, for example, carbon black; silica, quartz powder, glass beads, glass powder, silicates such as calcium silicate, aluminum silicate, kaolin, talc, clay, diatomaceous earth and wollastonite; metal oxides such as iron oxide, titanium oxide, zinc oxide and alumina; metal carbonates such as calcium carbonate and barium carbonate; metal sulfates such as calcium sulfate and barium sulfate; silicon carbide; silicon nitride; boron nitride; and various metal powders.

The platy fillers include, for example, mica, glass flakes and various metal foils.

These inorganic fillers can be used either singly or as a combination of two or more of them. It is preferred to combine the fibrous filler, particularly glass fibers or carbon fibers with the granular and/or platy filler(s) in order to obtain excellent mechanical strengths, dimensional accuracy and electric properties.

It is desirable to use the filler in the presence of, if necessary, a coupling agent or a surface treatment which is a functional compound such as an epoxy, isocyanate, silane or titanate compound. Alternatively the fillers may be previously subjected to the surface treatment or coupling treatment, or the coupling agent or surface treatment may be added in the step of preparing the raw material.

The inorganic filler is used in an amount of 1 to 100 parts by weight for 100 parts by weight of the polyester resin. The amount is determined suitably depending on the purpose and the kind of the additives. For example, when the inorganic filler is used for the purpose of improving the mechanical strengths, the amount thereof is preferably 5 to 100 parts by weight, particularly 10 to 80 parts by weight. When the amount of the inorganic filler added is insufficient, the mechanical strengths of the product are slightly reduced and when it is excessive, the molding becomes difficult and the mechanical strengths of the moldings are unsatisfactory.

The resin of the present invention may comprise, in addition to the above-described components, small amounts of other thermoplastic resins depending on the use thereof. The thermoplastic resin used as the additional one may be any of those stable at a high temperature. Examples of them include polyethylene, polyamide, polycarbonate, polyphenylene sulfide, polyphenylene oxide, polyacetal, polysulfone, polyether sulfone, polyether imides, polyether ketone and fluororesin. These thermoplastic resins can be used either singly or in the form of a mixture of two or more of them.

The resin of the present invention may contain known additives which are usually added to thermoplastic or thermosetting resins such as stabilizers, e.g., antioxidants and U.V. absorbers; antistatic agents; flame retardants; colorants, e.g., dyes and pigments; lubricants; crystallization accelerators; and nucleating agents selected suitably for the desired properties.

The composition also containing the abovementioned inorganic fillers, other resins and known additives can be produced by a process which will be described below.

A composition comprising the improved polyester resin produced by reacting the polyester resin with the epoxy compound as the base and the fillers etc. added thereto is produced by a process and an apparatus ordinarily employed in the production of synthetic resin compositions. Namely, the necessary components are mixed together and then kneaded and pelletized by means of a single-screw or twin-screw extruder. Some of the necessary components can be mixed together to form a master batch.

When the fillers etc. do not inhibit the reaction of the polyester resin with the epoxy compound, they can be added to the reaction system prior to the reaction or in the course of the reaction to form an intended composition.

In the production of the composition, it is preferred to pulverize a part or the whole of the resin components to be mixed and kneaded in order to facilitate the dispersion and the mixing of them.

Now the description will be made on the blow molding method by which the improved polyester resin of the present invention can be molded. In this method, the thermoplastic material is plasticized to form, for example, a tubular preform, i.e. parison, by extrusion or injection, which is then placed in a mold, expanded by blowing a gas thereinto and solidified by cooling. The most important characteristic required of the molding material is that no drawdown of the parison occurs in the molding step, in other words, the molten resin has a sufficient strength (melt tension). The melt viscosity required of the material is such that it can be extruded or injected. The degree of the die swelling essentially has no relation to the blow moldability.

As described above, the improved polyester resin of the present invention is a material having a sufficient melt tension and suitable for blow molding. The intended blow moldings can be produced therefrom by any blow molding method such as extrusion, injection, injection/extrusion, sheet blowing or a cold parison method.

It is also possible in the present invention to react the polyester resin with the epoxy compound in a cylinder of a blow molding machine, adding an inorganic filler or the like thereto, if necessary, and directly blow molding the mixture to form blow moldings having an intended composition.

In the vacuum molding, film extrusion molding or sheet extrusion molding or in coating electric wires, the drawdown of the resin is an important factor which exerts a critical effect on the moldability. The improved polyester resin of the present invention has an excellent melt tension and is substantially free from the drawdown as described above and, therefore, it is moldable by these methods.

It is apparent from the above description and Examples that the improved polyester resin of the present invention produced by reacting the thermoplastic polyester resin with the polyepoxy compound in the presence of the catalyst and the composition of the present invention have excellent characteristics such as melt tension without detriment to other physical properties of the polyester resin. They are thus suitable for being molded by blow molding, vacuum molding, sheet extrusion molding or film extrusion molding or for the use as a coating material for electric wires. The improved resin or composition of the present invention is usable as a material to be blow molded to form automobile pipes and tanks and cosmetic and medicine containers; as a material to be vacuum molded to form food containers; as a material for packaging films; and as a coating material for electric wires for automobiles, taking advantage of the excellent mechanical strengths, thermal resistance, chemical resistance and electric properties of the polyester resin.

[Examples]

The following Examples will further illustrate the present invention, which by no means limit the invention.

Examples 1 to 8 and Comparative Examples 1 to 4

Polybutylene terephthalate resin (PBT) was mixed with bisphenol A type epoxy compound (Epikote 1002) and ethyltriphenylphosphonium iodide (ETPPI) as the catalyst in amounts shown in Table 1. The mixture was kneaded under heating in a twin-screw extruder to conduct a reaction under the conditions shown in Table 1 and thus formed pellets. The characteristics of the pelletized resins were determined by methods which will be described below. Further the pellets were blow molded with a blow molding machine at a cylinder temperature of 250°C and the blow moldability thereof was examined. The results are shown in Table 1.

For comparison, the above procedure was repeated except that only the starting PBT (free from Epikote 1002 and catalyst) or a mixture of the starting PBT with Epikote 1002 but free from the catalyst was used. The results are shown in Table 1.

The starting polybutylene terephthalate resin (PBT) used herein had an intrinsic viscosity (I.V.) as determined in o-chlorophenol at 25°C of 1.4 and a carboxyl end group content of 23.6 meq/kg. Epikote 1002 had an epoxy equivalent of 642.

The characteristics of the improved polyester resin were determined by the following methods.

MI (melt index) :
MI was determined at 235°C under a load of 2160 g according to ASTM D-1238.

Melt tension:
A load applied when a resin ejected from an orifice having a diameter of 1 mm was taken off at a speed of 5 m/min with a capillograph kept at a temperature by 25°C higher than the melting point of PBT was measured with a road cell.

CEG (carboxyl end group content)
Benzyl alcohol was added to an accurately weighed small amount (about 0.2 g) of the sample. The mixture was molten by heating at 215°C and titrated with a 0.01 N solution of NaOH in benzyl alcohol. CEG was calculated in terms of milliequivalent per kilogram of the polyester resin (meq/kg).

Tensile strength:
The tensile strength was determined according to ASTM D-638.
The blow molded products obtained in Examples 2, 4 and 6 were pulverized and their MI, melt tension and carboxyl end group content were determined. They were substantially the same as those of the resin determined prior to the molding.

Table 1

| | | Example | | | | | | | | Comparative Example | | | |
|---|---|---|---|---|---|---|---|---|---|---|---|---|---|
| | | 1 | 2 | 3 | 4 | 5 | 6 | 7 | 8 | 1 | 2 | 3 | 4 |
| Formulation | PBT (pt. by wt.) | 100 | 100 | 100 | 100 | 100 | 100 | 100 | 100 | 100 | 100 | 100 | 100 |
| | Epikote 1002 (") | 0.25 | 0.5 | 1.0 | 1.5 | 3.0 | 5.0 | 1.5 | 1.5 | - | 1.5 | 3.0 | 1.5 |
| | ETPPI (") | 0.04 | 0.04 | 0.04 | 0.04 | 0.04 | 0.04 | 0.04 | 0.04 | - | - | - | - |
| | K[*1] | 0.17 | 0.33 | 0.66 | 0.99 | 1.98 | 3.30 | 0.99 | 0.99 | 0 | 0.99 | 1.98 | 0.99 |
| Reaction conditions | temperature (°C) | 250 | 250 | 250 | 250 | 250 | 250 | 250 | 150[*4] | 250 | 250 | 250 | 250 |
| | time (min) [*2] | 3.5 | 3.5 | 3.5 | 3.5 | 3.5 | 3.5 | 30 [*3] | 180[*4] | 3.5 | 3.5 | 3.5 | 60 |
| Characteristics | MI (g/10min) | 0.9 | 0.7 | 0.7 | 0.6 | 0.5 | 0.5 | 0.5 | 0.7 | 2.8 | 3.2 | 3.1 | 3.0 |
| | melt tension (g) | 2.6 | 3.7 | 4.5 | 4.6 | 4.8 | 4.5 | 4.8 | 4.2 | 1.1 | 1.0 | 1.1 | 1.1 |
| | CEG (meq/kg) | 10.9 | 7.5 | 6.3 | 4.2 | 3.5 | 4.1 | 6.7 | 7.2 | 28.7 | 26.1 | 26.4 | 29.3 |
| | tensile strength (kg/cm$^2$) | 538 | 540 | 548 | 549 | 543 | 537 | 538 | 545 | 534 | 532 | 535 | 534 |
| Blow moldability | drawdown of parison | slight | small | small | small | small | small | small | small | serious | serious | serious | serious |
| | evenness of thickness of blow molded products | nearly good | good | good | good | good | good | good | good | molding im-possible | molding im-possible | molding im-possible | molding im-possible |

*1 K is as defined in the above description.
*2 Average residence time.
*3 Heated in a batchwise melt kneader.
*4 The catalyst was side-fed, the mixture was melt kneaded at 250°C for a residence time of 0.3 min and solidified to form pellets, which was after-treated in the solid phase.

Examples 9 to 15 and Comparative Examples 5 to 7

Polybutylene terephthalate resin (PBT) was mixed with bisphenol A type epoxy compound (Epikote 1004) and ethyltriphenylphosphonium bromide (ETPPB) as the catalyst in amounts shown in Table 2. The mixture was kneaded under heating in a twin-screw extruder while glass fibers having a diameter of 9 μ and a length of 6 mm were side-fed in the middle part of the extruder to conduct a reaction to thereby form a glass fiber-containing composition.

For comparison, the above procedure was repeated except that only the starting PBT (free from Epikote 1004 and catalyst) or a mixture of the starting PBT with Epikote 1004 but free of the catalyst was used.

PBT used herein had an intrinsic viscosity of 1.4 and a carboxyl end group content of 28.4 meq/kg. Epikote 1004 had an epoxy equivalent of 934.

The characteristics and the blow moldability of them were determined in the same manner as in Examples 1 to 8. The results are shown in Table 2. The results obtained in the same manner as above except that the resin was replaced with polyethylene terephthalate (PET) are also shown in Table 2.

Table 2

| | | Ex. 9 | Ex. 10 | Ex. 11 | Ex. 12 | Ex. 13 | Ex. 14 | Comp. Ex. 5 | Comp. Ex. 6 | Ex. 15 | Comp. Ex. 7 |
|---|---|---|---|---|---|---|---|---|---|---|---|
| Formulation | PBT (or PET) (pt. by wt.) | 100 | 100 | 100 | 100 | 100 | 100 | 100 | 100 | (PET)100 | (PET)100 |
| | Epikote 1004 ( " ) | 2.5 | 2.5 | 2.5 | 2.5 | 2.5 | 2.5 | - | 2.5 | 2.5 | 2.5 |
| | ETPPB ( " ) | 0.01 | 0.04 | 0.04 | 0.04 | 0.1 | 0.04 | - | - | 0.04 | - |
| | glass fiber ( " ) | 26.0 | 11.5 | 26.0 | 44.0 | 26.0 | 26.0 | 26.0 | 26.0 | 26.0 | 26.0 |
| | K*1 | 0.94 | 0.94 | 0.94 | 0.94 | 0.94 | 0.94 | 0 | 0.94 | - | - |
| Reaction conditions | temperature (°C) | 250 | 250 | 250 | 250 | 250 | 235 | 250 | 250 | 260 | 260 |
| | time (min)*2 | 4.2 | 4.2 | 4.2 | 4.2 | 4.2 | 8.6 | 4.2 | 4.2 | 3.4 | 3.4 |
| Characteristics | MI (g/10min) | 1.0 | 1.3 | 1.1 | 0.7 | 1.0 | 1.1 | 1.9 | 2.0 | 1.7 | 2.4 |
| | melt tension (g)*3 | (4.8) | (5.1) | (5.1) | (5.1) | (5.2) | (4.7) | (1.0) | (1.1) | (4.0)*4 | (1.0)*4 |
| | CEG (meq/kg) | 7.0 | 5.4 | 5.7 | 5.5 | 4.3 | 6.7 | 30.1 | 31.2 | - | - |
| | tensile strength (kg/cm²) | 1128 | 861 | 1142 | 1376 | 1150 | 1135 | 1103 | 1114 | 1177 | 1138 |
| Blow moldability | drawdown of parison | small | small | small | small | small | small | large | large | small | large |
| | evenness of thickness of blow molded products | good | good | good | good | good | good | molding impossible | molding impossible | good | molding impossible |

*1 K is as defined in the above description.
*2 Average residence time.
*3 Value of the product proudced by extrusion of the composition without side feeding of the glass fibers.
*4 Determined at a temperature by 25°C higher than the melting point of PET.

Examples 16 to 20 and Comparative Examples 8 to 11

Polybutylene terephthalate (PBT) resin having an intrinsic viscosity of 1.0 and a carboxyl end group content of 52.3 meq/kg was mixed with an epoxy compound and ethyltriphenylphosphonium iodide (ETPPI) or dimethylaminomethylphenol (DMAMP) as the catalyst as shown in Table 3. The mixture was kneaded under heating in a twin-screw extruder at 240°C for 5.5 min (average residence time) to conduct a reaction to thereby form an improved resin in the form of pellets.

For comparison, the above procedure was prepared except that the resin free from the catalyst or the resin free from both the catalyst and the epoxy compound was prepared.

The results obtained in the same manner as that of Examples 1 to 8 are shown in Table 3.

The epoxy compounds herein used were as follows:

Epikote 828: bisphenol A type (epoxy equivalent: 192)

Epikote 154: phenol novolak type (epoxy equivalent: 180)

Epikote 190: glycidyl ester type (epoxy equivalent: 161), and

Epikote 604: glycidylamine type (epoxy equivalent: 117).

Table 3

| | | Example | | | | | Comparative Example | | | |
|---|---|---|---|---|---|---|---|---|---|---|
| | | 16 | 17 | 18 | 19 | 20 | 8 | 9 | 10 | 11 |
| Formulation | PBT (pt. by wt.) | 100 | 100 | 100 | 100 | 100 | 100 | 100 | 100 | 100 |
| | Epikote 828 ( ″ ) | 1.0 | - | - | - | 1.0 | - | 1.0 | - | - |
| | Epikote 154 ( ″ ) | - | 1.0 | - | - | - | - | - | 1.0 | - |
| | Epikote 190 ( ″ ) | - | - | 1.0 | - | - | - | - | - | 1.0 |
| | Epikote 604 ( ″ ) | - | - | - | 1.0 | - | - | - | - | - |
| | ETPPTI (or DMAMP) ( ″ ) | 0.04 | 0.04 | 0.04 | 0.04 | (DMAMP) 0.04 | - | - | - | - |
| | K[*1] | 1.00 | 1.06 | 1.19 | 1.63 | 1.00 | 0 | 1.00 | 1.06 | 1.19 |
| Characteristics | MI (g/10min) | 1.0 | 1.1 | 1.4 | 1.5 | 1.7 | 14.2 | 14.4 | 14.6 | 14.0 |
| | melt tension (g) | 4.3 | 4.0 | 3.4 | 3.2 | 3.1 | 0.8 | 0.8 | 0.9 | 0.9 |
| | CEG (meq/kg) | 8.7 | 12.0 | 13.4 | 13.6 | 13.3 | 55.0 | 54.2 | 53.1 | 53.5 |
| | tensile strength (kg/cm$^2$) | 540 | 546 | 541 | 545 | 533 | 531 | 537 | 536 | 529 |
| Blow moldability | drawdown of parison | small | small | small | small | small | serious | serious | serious | serious |
| | evenness of thickness of blow molded products | good | good | good | good | good[*2] | molding impossible | molding impossible | molding impossible | molding impossible |

*1 K is as defined in the above description.
*2 The moldings were discolored.

EP 0 334 620 A2

Example 21

90 parts by weight of the pellets formed in Example 17 were mixed with 10 parts by weight of carbon fibers, 10 parts by weight of potassium titanate whiskers or a mixture of 5 parts by weight of glass fibers and 5 parts by weight of glass flakes. Each of the mixtures thus formed was blow molded to obtain the moldings having an even thickness substantially without causing any drawdown of the parison.

On the contrary, mixtures of the pellets formed in Comparative Example 8 or 10 with the same filler as the one described above could not be blow molded, since drawdown was serious.

Example 22

The pellets of the improved polyester resin formed in Example 4 were extruded with a T-die sheet extrusion molding machine (temperature of the cylinder and die: 245°C, and that of the roll: 80°C) to form sheets having a thickness of 0.5 mm and a width of 300 mm. The extrusion moldability and evenness of the thickness of the sheets were excellent.

Then the sheets were shaped into boxes having a size of 150 mm x 80 mm x 50 mm by heating both faces by vacuum molding at a temperature of around 220°C with a vacuum molding machine FK-0431 (a product of Asano Kenkyujo Co., Ltd.) while the softness of the sheets was checked. The thickness of the sides and the bottom of each of the box type moldings was even.

On the contrary, when the resin produced in Comparative Example 1 or 2 was used, the extrudability thereof to form the sheet was poor and the sheets had an uneven thickness, since the resin had a poor melt tension. When the sheets were used in the vacuum molding, they were deformed in the softening step, since the strength of the softened resin was poor. The moldings thus obtained had an uneven thickness.

**Claims**

1. An improved polyester resin having a melt tension (determined as described hereinbefore) of at least 1.5 g, which is produced by reacting 100 parts by weight of a thermoplastic polyester resin with 0.02 to 20 parts by weight of a polyepoxy compound in the presence of a catalyst.

2. An improved polyester resin according to Claim 1, wherein the catalyst is a phosphonium compound.

3. An improved polyester resin according to Claim 1 or 2, wherein the thermoplastic polyester resin in polybutylene terephthalate or a polyester mainly comprising the same.

4. A polyester resin composition comprising the improved the improved polyester resin according to Claim 1, 2 or 3 and further 1 to 100 parts by weight of an inorganic filler.

5. A process for producing an improved polyester resin characterised by melt kneading 100 parts by weight of a thermoplastic polyester resin with 0.02 to 20 parts by weight of a polyepoxy compound in the presence of a catalyst for 0.1 to 120 min.

6. A process for producing an improved polyester resin characterized by melt kneading 100 parts by weight of a thermoplastic polyester resin with 0.02 to 20 parts by weight of a polyepoxy compound in the presence of a catalyst, temporarily solidifying the mixture and heat-treating it at a temperature in the range of 100°C to the melting point of the polyester resin for additional 30 h or less.

7. A process for producing an improved polyester resin according to Claim 5 or 6, wherein the polyepoxy compound is selected from bishpenol A type epoxy compounds and novolak type epoxy compounds.

8. A process for producing an improved polyester resin according to any one of Claims 5 to 7, wherein the catalyst is a phosphonium compound.

9. A process for producing an improved polyester resin according to any one of Claims 5 to 8, wherein the thermoplastic polyester resin is polybutylene terephthalate or a polyester mainly comprising the same.

10. Moldings produced by blow molding or vacuum molding the improved polyester resin according to Claim 1, 2, 3 or 4 or a composition comprising the same.